# EUROPEAN PATENT SPECIFICATION

(11) **EP 0 680 135 B1**
(45) Date of publication and mention of the grant of the patent: **14.01.1998**
(21) Application number: 94106461.0
(22) Date of filing: 26.04.1994
(51) Int. Cl.: H02M 3/158, H02M 1/00

(54) **Improved integrated magnetic buck converter**
Verbesserter integrierter magnetischer Abwärtskonverter
Convertisseur abaisseur magnétique intégré amélioré

(43) Date of publication of application: 02.11.1995
(73) Proprietor: WHIRLPOOL EUROPE B.V., 5507 SK Veldhoven (NL)
(72) Inventor: Bocchiola, Cesare A., c/o WHIRLPOOL ITALIA s.r.l., I-21025 Comerio (VA) (IT)
(74) Representative: Guerci, Alessandro

(56) References cited:
- US-A- 4 520 279
- PATENT ABSTRACTS OF JAPAN vol. 14, no. 433 (E-979) 17 September 1990 & JP-A-02 168 859 (TOSHIBA) 28 June 1990

## Description

This invention relates to improvements in integrated magnetic buck converters comprising a static switch frequentially switched OFF/ON, an inductor means with taps, a diode and a capacitive means, this latter being in parallel with the load fed by the converter. These circuits are known, for example from the publication "Modern DC to DC Switchmode Power Converter Circuits", authors Sevens-Bloom, publishers Van Norstrand, April 1983, page 178, figures 8.2(B).

In traditional converters in which an unregulated d.c. voltage is converted to a lower regulated level, a static switch is switched OFF/ON at a given frequency with the result that during the converter startup transient it is subjected to high stresses which compel the use of high-performance static switches. These stresses derive mainly from the high voltage excursions in the static switch. In this respect, the controlled switch has to be provided for maximum input voltage plus a certain margin to take account of short-duration transients and other dispersion phenomena.

From US-A-4520279 it is known to provide a transistor chopper with two transistor switches in series.

The aforesaid problems are solved according to the invention by the use of the solutions forming the subject of the accompanying claims.

The invention will be more apparent from the detailed description given hereinafter by way of example with reference to the accompanying drawing, in which:
Figure 1 shows a first embodiment of the invention based on the use of discrete components;
Figure 2 shows the voltage patterns at corresponding points of Figure 1;
Figure 3 shows in schematic form an embodiment based on the use of an integrated circuit (microcontroller).

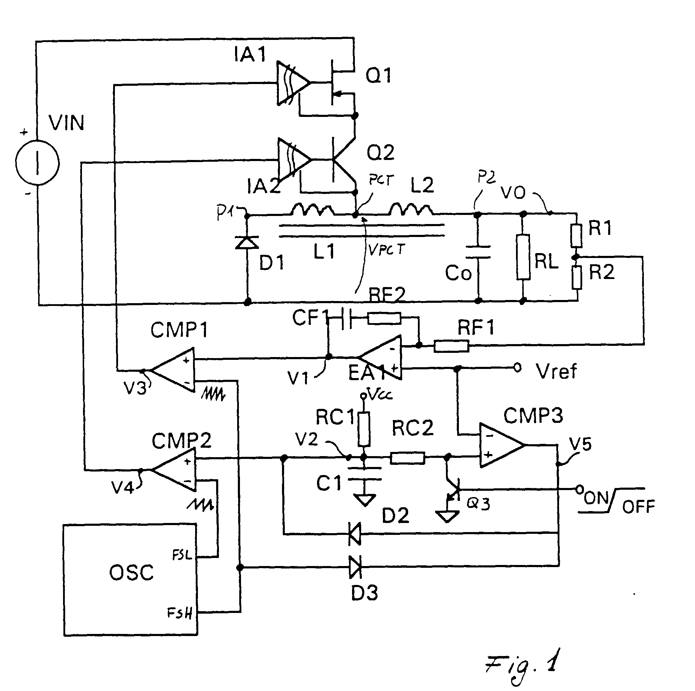

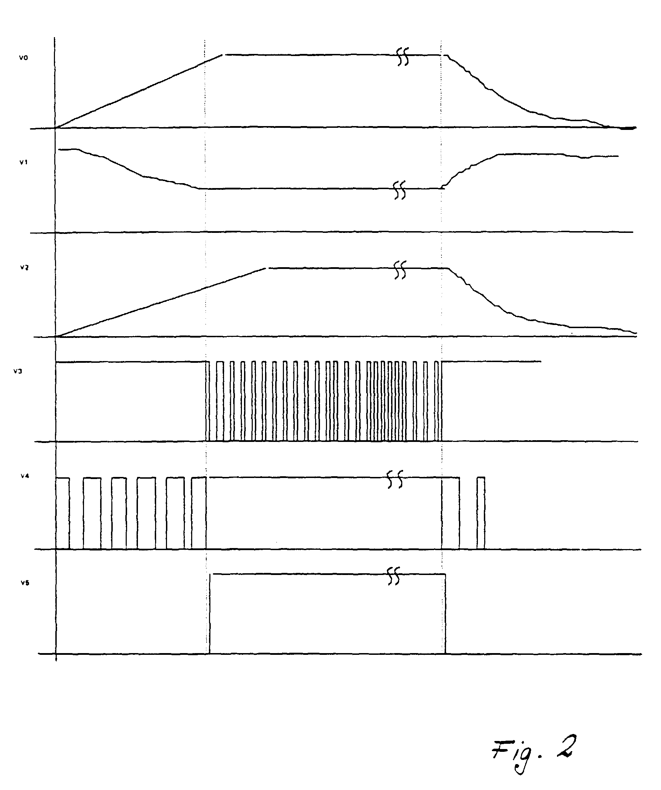

With reference to Figures 1 and 2, VIN indicates an unregulated d.c. voltage source, which can be a rectifier bridge followed by a smoothing filter in the case of mains supply (115 or 230 V).

Two static switches Q1 and Q2 with suitably different characteristics are connected in series with this source and with each other. Specifically, Q1 can be a power MOS and Q2 a bipolar transistor or a bipolar transistor with an isolated gate. The emitter of this latter (Q2) is connected to an intermediate tap PCT of an inductor (L1+L2) wound on a magnetic core. The part L1 of the inductor comprises N1 turns and the part L2 comprises N2 turns.

P1 represents the positive end and PCT the negative end of the part L1 of the inductor, whereas PCT represents the positive end of the part L2, the negative end of which is represented by P2. The end P1 is connected to the cathode of a freewheeling diode D1, the anode of which is connected to the negative of the source VIN . The end P2 is connected to the load RL, in parallel with which there is connected a smoothing capacitor CO. The negative end of the load is connected to the negative of the source VIN.

In parallel with the load RL there is a voltage divider R1, R2.

The inverting input of an error amplifier EA1 is connected to the intermediate tap of the voltage divider via a resistor RF1. A feedback branch formed by the capacitor CF1 and resistor RF2 in series is connected to the error amplifier EA1. The components RF1, RF2 and CF1 form a proportional-integral regulator means for the error amplifier EA1.

The non-inverting input of the error amplifier EA1 is connected to a reference voltage VREF. The output V1 of the error amplifier EA1 is connected to the non-inverting input of a comparator CMP1.

The inverting input of this latter is connected to a high frequency output FSH of an oscillator OSC. The output signal is sawtooth.

The output signal V3 of the comparator CPM1 is applied to the input of an isolation amplifier IA1 connected to the base of the power MOS Q1.

The reference voltage VREF is also applied to the inverting input of a further comparator CMP3, the non-inverting input of which is connected to the collector of a transistor Q3, the emitter of which is connected to earth, its base being put to ON or OFF by a switch, not shown.

The non-inverting input of the comparator CMP3 is also connected via a resistor RC2 to the non-inverting input of a further comparator CMP2. Between this input and the resistor RC2 there is connected a resistor RC1 (connected to a d.c. voltage Vcc), a capacitor C1 and a diode D2 which is connected to the output V5 of the comparator CMP3.

The inverting input of the comparator CMP2 is connected to the oscillator OSC, namely to its output FSL at which there is present a sawtooth voltage of lower frequency (known hereinafter as low) than that of its the output FSH. The output signal signal V4 of the comparator CMP2 is applied to the input of an isolation amplifier IA2 connected to the base of the transistor Q2.

A diode D3 leading to the output of the comparator CMP3 is connected into the connection between the output FSH of the oscillator OSC and the input of the comparator CMP1.

The startup and shutdown sequence of the components Q1 and Q2 enabling the advantages of the invention to be achieved is as follows.

Initially (at time = 0) the switch controlling the base of the transistor Q3 is OFF so that a high signal is applied to the base to saturate the transistor Q3. The capacitor C1 is hence discharged, as are all the other capacitors.

Both the power MOS Q1 and the transistor Q2 are OFF and the output voltage VO is zero. When the said switch is put to ON (low level at the base of the transistor Q3) the transistor Q3 is inhibited, and the circuit begins to operate by charging the capacitor C1 (which charges with a time constant given by the values of the components RC1 and C1).

As the voltage VREF (greater than 0) is applied to the inverting input, its output V5 will be low until the voltage V2 across the capacitor C1 reaches the value VREF. It will be noted that the voltage drop across the resistor RC2 does not count given that as the transistor Q3 is inhibited it does not absorb current.

The output voltage V5 of the comparator CMP3 keeps the inverting input of the comparator CMP1 low via the diode D3. The non-inverting input of the comparator CPM1 is at high level (see V1) because the error amplifier EA1 has its non-inverting input at the voltage VREF, whereas its inverting input is at the converter output voltage V0, which is increasing (see Figure 2). The output V1 of the error amplifier EA1 is at high level, as is the non-inverting input of the comparator CMP1. The output V3 of the comparator CMP1 is therefore high and puts the power MOS Q1 to 100% conduction via the isolation amplifier IA1, which acts as a level translator as the power MOS is suspended under high voltage.

At the same time the comparator CMP2 receives low frequency voltage from the output FSL of the oscillator OSC. As its non-inverting input is at the voltage V2 which is rising, the comparator CMP2 provides the transistor Q2, via the isolation amplifier IA2, with a square wave driver voltage V4 the duty cycle of which increases with increasing V2, so allowing soft start of the converter with gradual increase of the output voltage V0.

When the voltage V2 reaches the value VREF, the voltage V0 has assumed a value given by V0 = VINxVREF/VCC x R1/R2 (if R1>>R2); VCC is the auxiliary voltage of the driver circuit. This does not mean that this is the final value which V0 has to reach, but the circuit will be sized such that it is very close and slightly less.

Summarizing, during the startup or transition stage the power MOS Q1 is always conducting, whereas the transistor Q2 is driven ON/OFF frequentially with an increasing duty cycle.

The normal working stage starts substantially from when V2 reaches the value of VREF. The comparator CMP3 then switches its output V5 to high level, releasing the inverting input of the comparator CMP1 and forcing high the non-inverting input of the comparator CMP2. The output V4 of the comparator CMP2 then goes to high level and drives the transistor Q2 so that it is completely under conduction (ie in the ON state without OFF stages).

At the same time the comparator CMP1 receives at its inverting input the high frequency sawtooth voltage originating from the output FSH of the oscillator OSC. Its output V3 then begins to switch the power MOS Q1 ON/OFF at the frequency FSH and with a duty cycle depending on the comparison between the sawtooth and the voltage V1 which in the meantime will have fallen because the voltage V0 has already nearly attained its final value.

The voltage control loop, formed by the voltage divider R1, R2, the error amplifier EA1 with the relative components RF1, RF2 and CF2, and the comparator CMP1, hence fully operates to set the voltage V0 at its final value, which depends on VREF and the dividing ratio of R1, R2.

Hence when under normal working conditions the transistor Q2 is always conducting, whereas the power MOS is made to work frequentially with ON/OFF switching.

During the converter startup transient the opposite occurs. It is then the transistor Q2 which has to switch a voltage initially equal to VIN, to then decrease when having reached normal working the switching passes to the power MOS Q1. In addition because of the use of the integrated magnetic circuit, under normal working Q1 sees a lower voltage swing. Consequently Q1 is sized for a lower voltage than traditional converters, the efficiency of the converter being greater. The converter efficiency increase derives from the fact that the power MOS Q1 switches at a lower voltage and that, as it can be sized for such lower voltage, it will for engineering reasons be a faster component with less resistance in the ON state. Consequently switching and conduction losses will be greatly reduced.

Hence, the component Q1 (which is not necessarily a power MOS, indicated purely as an example) can be any solid state switch distinguished by a high switching speed, a low internal resistance and limited to supporting low voltage (less than the entire voltage VIN), whereas the component Q2 can be any solid state switch distinguished by a low switching speed, a low cost and able to operate at high voltage (because for a very short time it operates during the converter startup transient).

During the shutdown of the described converter the following occurs:
the initial state is characterised by all the circuit voltages being at normal working value. V0 is at the value set by the described control circuit, with the comparator CMP1 switching at constant frequency (ie at the frequency of the output FSH of the oscillator OSC) and with a constant duty cycle given that V1 is also at normal working value. The capacitor C1 is completely charged (V2 is equal to the auxiliary voltage VCC) and the output of the comparator CMP3 is high, as is the voltage V4.

Converter shutdown is achieved by putting the base of the transistor Q3 to OFF, ie high (by the switch not shown); this latter transistor hence becomes saturated and its collector voltage becomes low. The non-inverting input of the comparator CMP3 fails and the comparator switches so that its output V5 becomes low. This forces the inverting input of the comparator CMP1 to low level via the diode D3, so that the output V3 immediately becomes high and the power MOS Q1 is driven so that it is always ON. In the meantime C1 discharges relatively slowly through the resistor RC2 and transistor Q3. The diode D2 remains inhibited and no longer intervenes. Hence the comparator CMP2 switches with a decreasing duty cycle and with a fixed frequency FSL (relatively low) switching the transistor Q2 ON/OFF via the amplifier IA2. This leads to a progressive reduction in the converter output voltage V0. It should be noted that this shutdown stage, although "soft", is in reality faster than the startup stage, because in normal applications the voltage V0 is not required to go to zero slowly. The only important thing to prevent stressing the transistor Q1 is that the shutdown stage firstly involves total turn-on (so that it does not have to support voltage peaks across it), and its turn-off only after that of the switch Q2. Discharge of the capacitor C1 can hence take place during the time taken for two or three cycles of the FSL frequency.

It should be noted that there are no particular constraints on the relative frequencies of FSH and FSL. FSL is typically less than 1.5 FSH to prevent oversizing of the inductors L1 and L2 (which are wound on the same core). The switching losses of the transistor Q2 arise only when it switches, ie for a very limited time, so that even if high they cannot cause dangerous overheating.

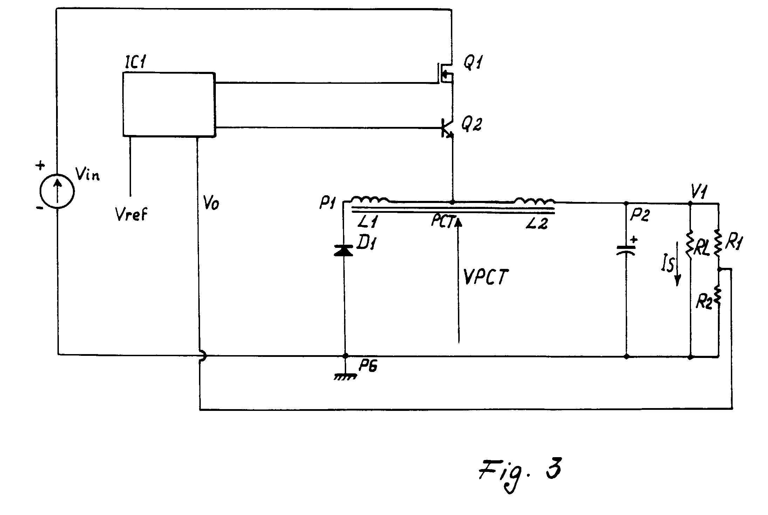

Although the invention has been described in the discrete form of Figures 1 and 2, it is easily possible for an expert of the art to drive the two switches Q1 and Q2 by a microcontroller or microprocessor C1, as shown schematically in Figure 3 in which the same reference symbols are used to identify the same external components.

The converter of the invention finds its principle use in all those applications in which the input voltage is high (for example rectified mains voltage), for example in domestic ovens with electrical resistance heating elements (in which this resistance is represented by the load resistance RL of the illustrated circuit), in dryers for drying clothes after washing, these dryers comprising resistance elements for heating the drying air, in domestic refrigerators or freezers using defrosting resistance elements, and in cooking hobs using resistive or infrared heating elements.

## Claims

1. A d.c. buck converter of integrated magnetic type, comprising: a static switch (Q1) frequentially switchable ON/OFF by a driver circuit, a tapped inductor means (L1+L2), to one tap of which (PCT) is connected the output of said static switch (Q1), a freewheeling diode (D1) connected to another tap (P1) of said inductor means (L1+L2), and a capacitive means (Co) connected to a further tap (P2) of said inductor means (L1+L2), characterised in that a second static switch (Q2) is provided in series with said static switch (Q1), the driver circuit switching said static switch (Q1) ON and frequentially switching said second static switch (Q2) OFF/ON during the converter transients, whereas during normal working it reverses this manner of driving the two switches and whereby the two switches have different characteristics.

2. Converter as claimed in claim 1 characterised in that the switching frequencies (FSL and FSH) of the driver circuit are different for said static switch (Q1) and for the second static switch (Q2), the switching frequency of the first (Q1) being greater than that of the second (Q2).

3. Converter as claimed in claim 1 or claims 1 and 2, characterised in that said static switch (Q1) is distinguished by a high switching speed, a low internal resistance and the requirement to withstand a lower voltage than the converter feed voltage, whereas the second static switch (Q2) is distinguished by a low switching speed, a low cost and the requirement to withstand a higher voltage than the other static switch (Q1).

4. The use of the converter claimed in claim 1 or claim 1 and one or both of claims 2 and 3, in a household electrical appliance comprising resistive heating elements, for controlling these latter.

## Patentansprüche

1. Gleichspannungszerhackerkonverter vom integrierten, magnetischen Typ, der folgendes aufweist: einen statischen Schalter (Q1), der durch eine Treiberschaltung ständig ein- und ausschaltbar ist, ein mit einem Abgriff versehene Induktionsspule (L1 + L2), deren Abgriff (PCT) mit dem Ausgang des statischen Schalters (Q1) verbunden ist, eine Freilaufdiode (D1), die mit einem anderen Abgriff (P1) der Spule (L1 + L2) verbunden ist, und einen Kondensator (Co), der mit einem weiteren Abgriff (P2) der Spule (L1 + L2) verbunden ist, **dadurch gekennzeichnet,** daß ein zweiter statischer Schalter (Q2) mit dem erstgenannten statischen Schalter (Q1) in Reihe geschaltet ist und daß die Treiberschaltung den erstgenannten statischen Schalter (Q1) in den Ein-Zustand schaltet und den zweiten statischen Schalter (Q2) während der Überschwingungsphasen des Konverters mit einer gewissen Frequenz aus- und einschaltet, während diese Art der Steuerung der beiden Schalter während des Normalbetriebs umgekehrt ist, wobei diese beiden Schalter unterschiedliche Kennwerte aufweisen.

2. Konverter nach Anspruch 1, dadurch gekennzeichnet, daß die Schaltfrequenzen (FSL und FSH) der Treiberschaltung für den erstgenannten statischen Schalter (Q1) und den zweiten statischen Schalter (Q2 unterschiedlich sind, wobei die Schaltfrequenz für den erstgenannten (Q1) größer als die des zweiten (Q2) ist.

3. Konverter nach Anspruch 1 oder 2, dadurch gekennzeichnet, daß der erstgenannte statische Schalter (Q1) sich durch eine hohe Schaltgeschwindigkeit, einen niedrigen Innenwiderstand und eine Spannungsfestigkeit auszeichnet, bei der die Grenzspannung niedriger als die Konverterspeisespannung ist, während der zweite statische Schalter sich durch eine niedrige Schaltgeschwindigkeit, niedrige Kosten und eine Spannungsfestigkeit auszeichnet, bei der die Grenzspannung höher als beim anderen statischen Schalter (Q1) ist.

4. Verwendung des Konverters nach einem der Ansprüche 1 bis 3 in elektrischen, Widerstandsheizelemente aufweisenden Haushaltsgeräten zur Steuerung dieser Widerstandsheizelemente.

## Revendications

1. Convertisseur à compensateur en courant continu du type magnétique intégré, comprenant : un commutateur statique (Q1) qui peut être commuté en fréquence en ARRET/MARCHE par un circuit d'attaque, un moyen de bobine d'inductance munie de prises (L1 + L2), à une prise de laquelle (PCT) on relie la sortie dudit commutateur statique (Q1), une diode de roue libre (D1) reliée à une autre prise (P1) dudit moyen de bobine d'inductance (L1 + L2), et un moyen capacitif (C0) relié à une autre prise (P2) dudit moyen de bobine d'inductance (L1 + L2), caractérisé en ce qu'un second commutateur statique (Q2) est installé en série avec ledit commutateur statique (Q1), le circuit d'attaque commutant ledit commutateur statique (Q1 ) en MARCHE et commutant en fréquence ledit second commutateur statique (Q2) en ARRET/MARCHE pendant les régimes transitoires du convertisseur, alors qu'en régime normal il inverse cette manière d'attaquer les deux commutateurs, et en raison de quoi les deux commutateurs présentent des caractéristiques différentes.

2. Convertisseur selon la revendication 1, caractérisé en ce que les fréquences de commutation (FSL et FSH) du circuit d'attaque sont différentes pour ledit commutateur statique (Q1) et pour le second commutateur statique (Q2), la fréquence de commutation du premier (Q1) étant supérieure à celle du second (Q2).

3. Convertisseur selon la revendication 1 ou les revendications 1 et 2, caractérisé en ce que ledit commutateur statique (Q1) se distingue par une vitesse de commutation élevée, une faible résistance interne et l'exigence de supporter une tension inférieure à la tension d'alimentation du convertisseur, alors que le second commutateur statique (Q2) se distingue par une faible vitesse de commutation, un faible coût et l'exigence de supporter une tension plus élevée que l'autre commutateur statique (Q1).

4. Utilisation du convertisseur selon la revendication 1 ou la revendication 1 et l'une ou les deux revendications 2 et 3, dans une application électrique domestique comprenant des éléments de chauffage résistifs dans le but de commander ces derniers.
